**Europäisches Patentamt**

**European Patent Office**

**Office européen des brevets**

(19)

(11) Numéro de publication: **0 085 644**
**A1**

# (12) DEMANDE DE BREVET EUROPEEN

(21) Numéro de dépôt: **83630015.2**

(22) Date de dépôt: **21.01.83**

(51) Int. Cl.³: **C 03 B 37/05**

(30) Priorité: **29.01.82 LU 83910**

(43) Date de publication de la demande:
**10.08.83 Bulletin 83/32**

(84) Etats contractants désignés:
**AT BE CH DE FR GB IT LI NL SE**

(71) Demandeur: **ARBED S.A.**
**Avenue de la Liberté 19**
**L-2930 Luxembourg(LU)**

(72) Inventeur: **Mathgen, Georges**
**41 rue de Beggen**
**L-1221 Luxembourg(LU)**

(72) Inventeur: **Scherer, Robert**
**30 Grand-Rue**
**L-1660 Luxembourg(LU)**

(72) Inventeur: **Prüm, Charles**
**41 rue Jean Jaurès**
**L-3490 Dudelange(LU)**

(72) Inventeur: **Clees, Roland**
**66 rue Tattenberg**
**L-3569 Dudelange(LU)**

(74) Mandataire: **Neyen, René**
**Administration Centrale de l'Arbed Case postale 1802**
**L-2930 Luxembourg(LU)**

(54) **Dispositif d'effilage par centrifugation pour la fabrication de fibres.**

(57) Un dispositif d'effilage par centrifugation pour la fabrication de fibres minérales à partir de matière fondue, comporte
une pièce de révolution (1) possédant un évidement partiel,
supportant sur son aire latérale une couche d'usure (8), un
axe de rotation (2), fixé au centre de la pièce de révolution (1)
et muni de moyens d'amenée d'air sous pression (3) audit
évidement partiel, ainsi que des moyens pour guider l'air
sous pression de l'évidement partiel sur la couche d'usure
(8). Les gaz refroidissant la pièce de révolution (1) passent
par le ou les canaux (7) d'un déflecteur (5) qui les dirige vers
la couche d'usure (8). Les canaux (7) de déflecteur (5) sont
munis d'ailettes orientables.

FIG.1

Dispositif d'effilage par centrifugation pour la fabrication de fibres.

L'invention concerne un dispositif d'effilage par centrifugation pour la fabrication de fibres, en particulier de fibres minérales qui sont obtenues à partir d'un film de laitier ou de roches fondues soumises à un refroidissement sous des conditions bien déterminées.

La technique couramment employée qui consiste à souffler de la matière fondue à travers une tuyère du type Venturi, ne permet pas de suivre le rythme élevé, de l'ordre de 5-7 tonnes par heure, des fours de fusion modernes.

Une autre technique de production de laine minérale consiste en un effilage mécanique de la matière fondue par des dispositifs d'effilage par centrifugation, comportant un à quatre rotors montés en cascade. Souvent, dans le cas de dispositifs multiroues, le premier rotor, sur lequel tombe le filet de matière fondue, sert à étaler celui-ci et ce sont essentiellement les rotors suivants qui produisent les fibres.

Les spinners multiroues présentent cependant l'inconvénient de produire des fibres relativement courtes à cause de la conception même des différents éléments qui provoquent la fibérisation.

Au contact avec le rotor tournant à vitesse élevée, la matière fondue se sépare en fines gouttelettes projetées dans l'air environnant sous l'effet de la force centrifuge. Dès que ces gouttelettes quittent la surface du rotor, elles commencent à s'allonger. Elles s'étirent et s'amincissent au centre, alors qu'aux extrémités il y a formation de deux nodules. Ces nodules se séparent des fibres à la fin du processus de solidification et constituent le déchet (environ 30 % de la masse fondue).

Il est essentiel pour l'obtention de fibres de longueur élevée que les gouttelettes aient une viscosité bien déterminée à l'instant de leur projection par le rotor, de sorte qu'elles puissent s'étirer au maximum.

Or, la viscosité des mélanges utilisés pour la fabrication de fibres minérales ne varie que peu aux températures de l'ordre de 1350 - 1450°C, mais présente le plus souvent une augmentation assez brusque vers les températures légèrement plus basses c.à d. de 1250 - 1300°C. Il s'ensuit que la longueur d'une fibre est inversément proportionnelle à la vitesse avec laquelle la gouttelette, d'une température donnée et soumise à une accélération, traverse cet intervalle étroit de température dans lequel elle se solidifie. Une surchauffe du jet sortant du four n'améliore en rien la qualité des fibres puisque la viscosité initiale du film devient trop faible, de sorte que sur les premiers rotors, la quantité de nodules non fibérisés est souvent prohibitive.

Dans les dispositifs connus les surfaces (couches d'usure) des rotors des spinners sur lesquelles tombe le film de laitier ou de roches fondues avant d'être disloqué et projeté dans l'espace environnant par la force centrifuge, sont fortement refroidies à l'eau de sorte que le jet de laitier touchant cette surface subit un choc thermique brutal, et dès leur départ du rotor, les gouttelettes présentent déjà une viscosité proche du point d'inflexion de la courbe viscosité - température.

De plus les rotors sont entourés de buses injectant de l'air froid sous pression dans le nuage de fibres se formant devant elles. Cet air a pour but de parfaire l'étirage des gouttelettes en fibreset de transporter ces dernières dans la chambre à laine. Il leur impose

0085644

en fait un refroidissement supplémentaire pendant la période critique de l'étirage diminuant ainsi la longueur moyenne des fibres produites et augmentant la proportion de nodules non fibérisés.

La présente invention a comme but de remédier à ces inconvénients et de proposer un dispositif produisant des fibres ayant une longueur élevée.

Ce but est atteint par le dispositif selon l'invention où l'axe du rotor, comporte des moyens d'amenée de gaz sous pression.

Dans une des réalisations du dispositif suivant l'invention, la couche d'usure du rotor est refroidie par l'intermédiaire d'ailettes qui se trouvent en contact thermique avec celle-ci et qui sont elles-mêmes refroidies par l'air sous pression amené par l'axe du rotor. Cet air, après s'être échauffé au contact des ailettes et des surfaces intérieures du rotor, est dévié par un déflecteur et assure de cette façon également le transport des fibres dans la chambre à laine. L'air étant chaud, le refroidissement des fibres n'est pas trop brutal.

Les avantages obtenus en utilisant le rotor selon l'invention sont notamment les suivants:

- le refroidissement à air, plus souple que le refroidissement classique par eau, permet de travailler à une température de surface plus élevée et d'éviter un refroidissement brutal du film de laitier au contact avec la roue.

- l'utilisation de l'air, qui s'est échauffé au contact des surfaces intérieures du rotor, pour parfaire l'étirage des fibres, et pour les projeter dans la chambre à laine, évite l'effet de trempe que subissent les fibres en voie de formation dans les installations classiques.

L'invention sera décrite plus en détail à l'aide des dessins qui représentent de manière non-limitative un mode d'exécution du dispositif suivant l'invention.

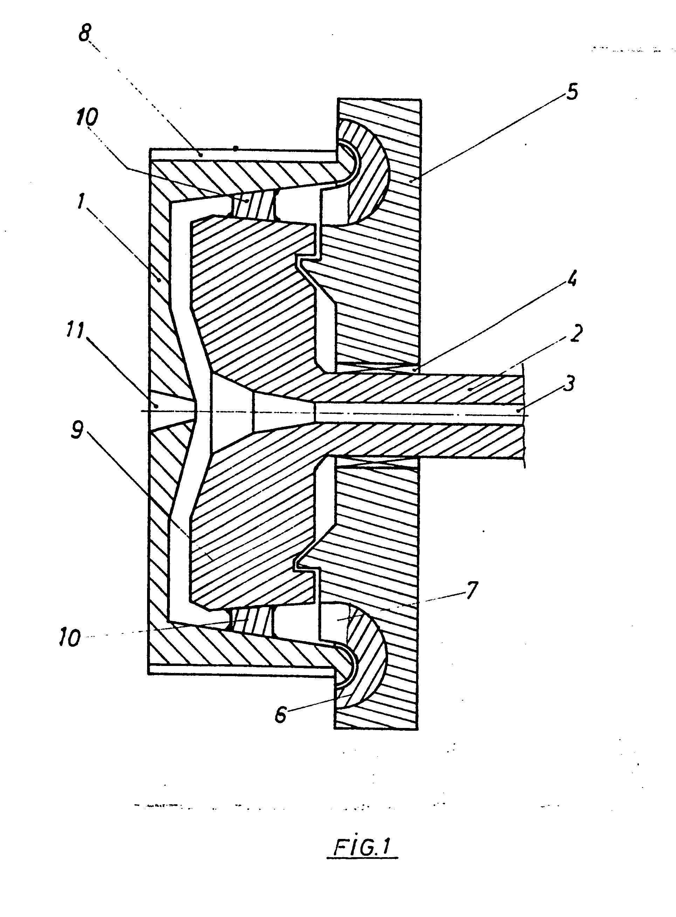

- la fig. 1 montre une coupe longitudinale schématique à travers un rotor conforme à l'invention.

En fig. 1 on distingue un rotor, comportant une pièce de révolution 1, refroidie par air et un axe 2 relié à un dispositif d'entraînement non représenté, qui lui imprime une vitesse de rotation de l'ordre de 5000 tours par minute. A l'intérieur de l'axe 2 sont situés des moyens d'amenée 3 d'air de refroidissement sous pression. L'axe peut avoir la forme d'un tuyau. L'air de refroidissement, dont une partie traverse une buse 11 longe ensuite la pièce de révolution 1, qui est en contact thermique avec la couche d'usure 8. Cette pièce 1 réalisée en un matériau à conductibilité thermique élevée est fixée à l'évasement 9 de l'axe 2, grâce à plusieurs supports de fixation 10.

Le déflecteur d'air 5 sera de préférence fixe et pourra assumer grâce au roulement 9 la fonction de palier pour l'axe 2 du rotor. Il peut comporter dans son ou ses canaux 7 des déflecteurs 6, éventuellement orientables, qui permettent de réduire les turbulences et de souffler l'air sous un angle bien défini sur la couche d'usure 8.

La couche d'usure 8, constituée par un anneau profilé en alliage résistant à l'usure à haute température est fixée sur le corps 1 du rotor par soudage à arc plasma transféré, en utilisant des poudres à base de nickel, de cobalt ou de fer avec incorporation éventuelle de carbures de tungstène ou de titane. Le profilage de la surface est ensuite effectué par usinage.

L'air dirigé par l'intermédiaire de la buse 11 - qui peut être ajustable - vers la chambre à laine, aide à entraîner les fibres dans celle-ci. En jouant sur l'orientation de la buse 11, sur l'ajustage du déflecteur 5, ainsi que sur les pressions d'air respectives, il est possible d'optimiser la répartition des fibres sur la bande collectrice de la chambre à laine. On peut évidemment se servir en outre de buses supplémentaires fixes de type classique

- 5 -                    0085644

pour réaliser cette répartition.

Par un choix judicieux du débit d'air, on ajuste la température de la couche d'usure à la valeur désirée, compatible avec les propriétés mécaniques et thermiques de celle-ci.

L'axe 2 seul peut, dans une variante, être refroidi par un circuit classique de refroidissement par eau. De tels circuits sont habituellement fermés et comportent notamment un échangeur de chaleur et une pompe dont le débit est asservi à la température de l'eau.

Pour améliorer l'échange thermique entre la couche d'usure 8 et l'air de refroidissement, la pièce de révolution 1, réalisée en un matériau excellent conducteur de la chaleur, peut comporter des ailettes.

Il est également concevable de remplacer l'air de refroidissement par un gaz quelconque approprié. On peut aussi, pour des applications spéciales, prévoir un tube d'injection de liquide au centre des moyens d'amenée d'air 3 et débouchant dans la buse 11.

0085644

## Revendications

1. Dispositif d'effilage par centrifugation pour la fabrication de fibres, en particulier de fibres minérales, à partir de matière fondue, constitué par une pièce de révolution (1) montée sur un axe de rotation (2), caractérisé ce que l'axe (2) comporte des moyens d'amenée de gaz (3) sous pression.

2. Dispositif selon la revendication 1, caractérisé en ce que les moyens d'amenée de gaz (3) aboutissent à au moins un élément se trouvant en contact thermique avec la partie (8) sur laquelle tombe la matière fondue.

3. Dispositif selon les revendications 1 et 2, caractérisé en ce que les moyens d'amenée de gaz aboutissent à la couche (8) sur laquelle tombe la matière fondue.

4. Dispositif selon la revendication 1, caractérisé en ce que les moyens d'amenée de gaz (3) aboutissent au moins à une buse ajustable (11) montée dans le prolongement de l'axe (2).

5. Dispositif selon la revendication 1, caractérisé en ce qu'il comporte:
   - une pièce de révolution (1) possédant un évidement partiel, supportant sur son aire latérale une couche d'usure (8);
   - un axe de rotation (2), fixé au centre de la pièce de révolution (1) et muni de moyens d'amenée d'air sous pression (3) audit évidement partiel;
   - des moyens d'amenée d'air sous pression dudit évidement partiel sur la couche d'usure (8).

6. Dispositif selon la revendication 5, caractérisé en ce que les gaz refroidissant la pièce de révolution (1) passent par le ou les canaux (7) d'un déflecteur (5) qui les dirige vers la couche d'usure (8).

7. Dispositif selon une des revendications 5 ou 6, caractérisé en ce que le ou les canaux (7) de déflecteur (5) sont munis d'ailettes (6).

8. Dispositif selon une des revendications 5, 6 ou 7, caractérisé en ce que les ailettes (6) sont orientables.

9. Dispositif selon une des revendications 5 à 8, caractérisé en ce que la pièce de révolution (1) comporte des ailettes de refroidissement se trouvant au moins partiellement dans ledit évidement partiel.

83630015.2
0085644

FIG.1

Office européen
des brevets

**RAPPORT DE RECHERCHE EUROPEENNE**

0085644
Numéro de la demande

EP 83 63 0015

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X | CH-A- 404 879 (AKTIEBOLAGET STATENS SKOGSINDUSTRIER) <br> * En entier, en particulier lignes 35-38 * | 1-3,5, 6 | C 03 B 37/05 |
| | --- | | |
| X | US-A-2 609 566 (SLAYTER) <br><br> * Figures 1,7,11; colonne 5, lignes 54-75; colonne 6, lignes 1-57 * | 1-3,5, 6 | |
| | --- | | |
| X | US-A-3 331 668 (EKDAHL) <br> * En entier * | 1,2,5 | |
| | --- | | |
| X | US-A-3 238 029 (CULLEN) <br> * Figure 3 + texte * | 1,2,5 | |
| | ----- | | |

DOMAINES TECHNIQUES
RECHERCHES (Int. Cl. ³)

C 03 B 37/00

Le présent rapport de recherche a été établi pour toutes les revendications

| Lieu de la recherche <br> LA HAYE | Date d'achèvement de la recherche <br> 19-04-1983 | Examinateur <br> VAN DEN BOSSCHE W.L. |
|---|---|---|